(19) **Europäisches Patentamt / European Patent Office / Office européen des brevets**

(11) **EP 4 319 451 A1**

(12) **EUROPEAN PATENT APPLICATION**
published in accordance with Art. 153(4) EPC

(43) Date of publication:
**07.02.2024 Bulletin 2024/06**

(21) Application number: **22774030.5**

(22) Date of filing: **07.03.2022**

(51) International Patent Classification (IPC):
**H04W 76/14** (2018.01)      **H04W 76/28** (2018.01)
**H04W 28/02** (2009.01)

(52) Cooperative Patent Classification (CPC):
**H04W 28/02; H04W 76/14; H04W 76/28**

(86) International application number:
**PCT/CN2022/079525**

(87) International publication number:
**WO 2022/199368 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2021 CN 202110322000**

(71) Applicant: **Datang Mobile Communications Equipment Co., Ltd.**
**Beijing 100085 (CN)**

(72) Inventor: **ZHAO, Yali**
**Beijing 100085 (CN)**

(74) Representative: **Maiwald GmbH**
**Engineering**
**Elisenhof**
**Elisenstrasse 3**
**80335 München (DE)**

(54) **RESOURCE ALLOCATION METHOD AND APPARATUS, AND TERMINAL**

(57)   A resource allocation method, a resource allocation apparatus, and a terminal are provided in the present disclosure, where the resource allocation method includes: obtaining a sidelink destination identity and/or one or more sidelink logical channels which are in active time of a sidelink discontinuous transmission on a time domain resource corresponding to a sidelink grant; performing resource allocation according to the sidelink destination identity and/or the one or more sidelink logical channels, where the active time of sidelink discontinuous transmission includes: an active time of a sidelink discontinuous reception (DRX) and/or an active time of a sidelink discontinuous transmission (DTX).

obtaining a sidelink destination identity and/or one or more sidelink logical channels which are in an active time of a sidelink discontinuous transmission on a time domain resource corresponding to a sidelink grant — 51

performing resource allocation according to the sidelink destination identity and/or the one or more sidelink logical channels, where the active time of sidelink discontinuous transmission includes: an active time of a sidelink DRX and/or an active time of a sidelink DTX — 52

**FIG. 5**

**Description**

**CROSS REFERENCE OF RELATED APPLICATION**

The present application claims a priority of Chinese patent application No.202110322000.3 filed on March 25, 2021, the content of which is incorporated herein by reference in its entirety.

**TECHNICAL FIELD**

The present disclosure relates to the technical field of a terminal, and in particular, to a resource allocation method, a resource allocation apparatus and a terminal.

**BACKGROUND**

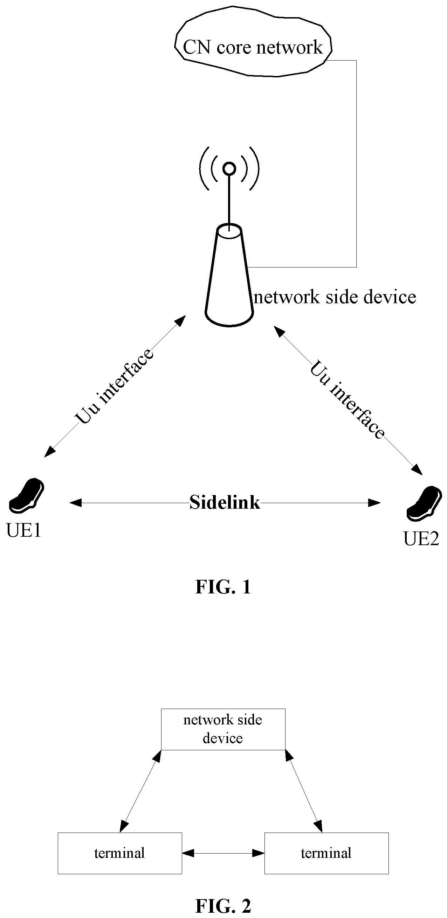

Sidelink refers to a method in which adjacent terminals can perform data transmission through a sidelink (SL), also known as a bypass or a side link, within a short distance. The radio interface corresponding to the sidelink is called a sidelink interface (also called a sidelink interface). As shown in FIG. 1, a terminal (User Equipment, UE) 1 can directly communicate with UE2 through Sidelink.

However, in the current sidelink logical channel priority (Logical Channel Prioritization, LCP) procedure (that is, the sidelink interface resource allocation procedure), the factors such as whether there is available sidelink data and whether the logical channel restriction (LCH restriction) is met are only considered for the selection of the sidelink destination identity (destination) or the sidelink logical channel (Logical Channel, LCH), but other factors are not considered. As a result, the sidelink interface destination or LCH selected by the terminal may not be able to transmit data, thereby resulting in waste of resources of the sidelink interface.

**SUMMARY**

The purpose of the present disclosure is to provide a resource allocation method, a resource allocation apparatus and a terminal, so as to solve the problem of resource waste in the resource allocation scheme for sidelink interface in the related art.

In order to solve the above-mentioned technical problems, an embodiment of the present disclosure provides a resource allocation method, which includes: obtaining a sidelink destination identity and/or one or more sidelink logical channels which are in active time of a sidelink discontinuous transmission on a time domain resource corresponding to a sidelink grant; performing resource allocation according to the sidelink destination identity and/or the one or more sidelink logical channels, where the active time of sidelink discontinuous transmission includes: an active time of a sidelink discontinuous reception (DRX) and/or an active time of a sidelink discontinuous transmission (DTX).

Optionally, the obtaining the sidelink destination identity in the active time of the sidelink discontinuous transmission on the time domain resource corresponding to the sidelink grant, includes: obtaining the sidelink destination identity in the active time of the sidelink discontinuous transmission on the time domain resource corresponding to the sidelink grant according to a first condition, where the first condition includes at least one of the following: the sidelink destination identity is in the active time of sidelink discontinuous transmission on the time domain resource corresponding to the sidelink grant; or at least one sidelink logical channel of all the sidelink logical channels corresponding to the sidelink destination identity is in the active time of sidelink discontinuous transmission on the time domain resource corresponding to the sidelink grant.

Optionally, after the obtaining the sidelink destination identity in the active time of the sidelink discontinuous transmission on the time domain resource corresponding to the sidelink grant, the method further includes: selecting a target sidelink logical channel out of the sidelink logical channels corresponding to the sidelink destination identity according to a second condition, where the second condition includes: the sidelink logical channel is in the active time of sidelink discontinuous transmission on the time domain resource corresponding to the sidelink grant.

Optionally, the obtaining the sidelink logical channel in the active time of the sidelink discontinuous transmission on the time domain resource corresponding to the sidelink grant includes: obtaining the sidelink logical channel in the active time of the sidelink discontinuous transmission on the time domain resource corresponding to the sidelink grant according to a first method; where the first method includes: determining DRX configuration information corresponding to the sidelink logical channel according to the sidelink destination identity corresponding to the sidelink logical channel; determining whether the sidelink logical channel is in the active time of the sidelink discontinuous transmission on the time domain resource corresponding to the sidelink grant according to the DRX configuration information; or, determining the DRX configuration information corresponding to the sidelink logical channel according to a quality of service (QoS) parameter corresponding to the sidelink logical channel; determining whether the sidelink logical channel is in the active time of sidelink discontinuous transmission on the time domain resource corresponding to the sidelink grant according to the DRX configuration information.

Optionally, the obtaining the sidelink destination identity in the active time of the sidelink discontinuous transmission on the time domain resource corresponding to the sidelink grant includes: obtaining the sidelink destination identity in the active time of the sidelink discontinuous transmission on the time domain resource corresponding to the sidelink grant according to a second method; where the second method includes: determining DRX configuration information corresponding to the sidelink destination identity according to a first address; determining whether the sidelink destination identity is in the active time of the sidelink discontinuous transmission on the time domain resource corresponding to the sidelink grant according to the DRX configuration information; the first address includes the sidelink destination identity, or a combination of a sidelink source identity and the sidelink destination identity; or, determining a QoS parameter corresponding to the sidelink logical channel according to the sidelink logical channel corresponding to the sidelink destination identity; determining the DRX configuration information corresponding to the QoS parameter according to the QoS parameter; determining whether the sidelink logical channel is in the active time of the sidelink discontinuous transmission on the time domain resource corresponding to the sidelink grant according to the DRX configuration information; determining, in a case that at least one sidelink logical channel corresponding to the sidelink destination identity is in the active time of the sidelink discontinuous transmission on the time domain resource corresponding to the sidelink grant, that the sidelink destination identity is in the active time of the sidelink discontinuous transmission on the time domain resource corresponding to the sidelink grant.

An embodiment of the present disclosure also provides a terminal, which includes a memory, a transceiver, and a processor, where the memory is configured to store a computer program; the transceiver is configured to send and receive data under the control of the processor; the processor is configured to read the computer program in the memory and perform the following operations of obtaining a sidelink destination identity and/or one or more sidelink logical channels which are in active time of a sidelink discontinuous transmission on a time domain resource corresponding to a sidelink grant; performing resource allocation according to the sidelink destination identity and/or the one or more sidelink logical channels, where the active time of sidelink discontinuous transmission includes: an active time of a sidelink discontinuous reception (DRX) and/or an active time of a sidelink discontinuous transmission (DTX).

Optionally, the obtaining the sidelink destination identity in the active time of the sidelink discontinuous transmission on the time domain resource corresponding to the sidelink grant, includes: obtaining the sidelink destination identity in the active time of the sidelink discontinuous transmission on the time domain resource corresponding to the sidelink grant according to a first condition, where the first condition includes at least one of the following: the sidelink destination identity is in the active time of sidelink discontinuous transmission on the time domain resource corresponding to the sidelink grant; or at least one sidelink logical channel of all the sidelink logical channels corresponding to the sidelink destination identity is in the active time of sidelink discontinuous transmission on the time domain resource corresponding to the sidelink grant.

Optionally, the operations further include: selecting, after the obtaining the sidelink destination identity in the active time of the sidelink discontinuous transmission on the time domain resource corresponding to the sidelink grant, a target sidelink logical channel out of the sidelink logical channels corresponding to the sidelink destination identity according to a second condition, where the second condition includes: the sidelink logical channel is in the active time of sidelink discontinuous transmission on the time domain resource corresponding to the sidelink grant.

Optionally, the obtaining the sidelink logical channel in the active time of the sidelink discontinuous transmission on the time domain resource corresponding to the sidelink grant includes: obtaining the sidelink logical channel in the active time of the sidelink discontinuous transmission on the time domain resource corresponding to the sidelink grant according to a first method; where the first method includes: determining DRX configuration information corresponding to the sidelink logical channel according to the sidelink destination identity corresponding to the sidelink logical channel; determining whether the sidelink logical channel is in the active time of the sidelink discontinuous transmission on the time domain resource corresponding to the sidelink grant according to the DRX configuration information; or, determining the DRX configuration information corresponding to the sidelink logical channel according to a quality of service (QoS) parameter corresponding to the sidelink logical channel; determining whether the sidelink logical channel is in the active time of sidelink discontinuous transmission on the time domain resource corresponding to the sidelink grant according to the DRX configuration information.

Optionally, the obtaining the sidelink destination identity in the active time of the sidelink discontinuous transmission on the time domain resource corresponding to the sidelink grant includes: obtaining the sidelink destination identity in the active time of the sidelink discontinuous transmission on the time domain resource corresponding to the sidelink grant according to a second method; where the second method includes: determining DRX configuration information corresponding to the sidelink destination identity according to a first address; determining whether the sidelink destination identity is in the active time of the sidelink discontinuous transmission on the time domain resource corresponding to the sidelink grant according to the DRX configuration information; the first address includes the sidelink destination identity, or a combination of a sidelink source identity and the sidelink destination identity; or, determining a QoS parameter corresponding to the sidelink logical channel according to the sidelink logical channel corresponding to the sidelink destination identity; determining the DRX configuration information corresponding to the QoS parameter according to the QoS parameter; determining whether the sidelink logical channel is in the active time of the sidelink discontinuous transmission on the time domain resource corresponding to the sidelink grant according to the DRX configuration information; determining, in a case that at least one sidelink logical channel corresponding to the sidelink destination identity is in the active time of the sidelink discontinuous transmission on the time domain resource corresponding to the sidelink grant, that the sidelink destination identity is in the active time of the sidelink discontinuous transmission on the time domain resource corresponding to the sidelink grant.

An embodiment of the present disclosure also provides a resource allocation apparatus, which includes: a first obtaining unit, configured to obtain a sidelink destination identity and/or one or more sidelink logical channels which are in active time of a sidelink discontinuous transmission on a time domain resource corresponding to a sidelink grant; a first allocating unit, configured to perform resource allocation according to the sidelink destination identity and/or the one or more sidelink logical channels, where the active time of sidelink discontinuous transmission includes: an active time of a sidelink discontinuous reception (DRX) and/or an active time of a sidelink discontinuous transmission (DTX).

Optionally, the obtaining the sidelink destination identity in the active time of the sidelink discontinuous transmission on the time domain resource corresponding to the sidelink grant, includes: obtaining the sidelink destination identity in the active time of the sidelink discontinuous transmission on the time domain resource corresponding to the sidelink grant according to a first condition, where the first condition includes at least one of the following: the sidelink destination identity is in the active time of sidelink discontinuous transmission on the time domain resource corresponding to the sidelink grant; or at least one sidelink logical channel of all the sidelink logical channels corresponding to the sidelink destination identity is in the active time of sidelink discontinuous transmission on the time domain resource corresponding to the sidelink grant.

Optionally, the method further includes: a first selecting unit, configured to select, after the obtaining the sidelink destination identity in the active time of the sidelink discontinuous transmission on the time domain resource corresponding to the sidelink grant, a target sidelink logical channel out of the sidelink logical channels corresponding to the sidelink destination identity according to a second condition, where the second condition includes: the sidelink logical channel is in the active time of sidelink discontinuous transmission on the time domain resource corresponding to the sidelink grant.

Optionally, the obtaining the sidelink logical channel in the active time of the sidelink discontinuous transmission on the time domain resource corresponding to the sidelink grant includes: obtaining the sidelink logical channel in the active time of the sidelink discontinuous transmission on the time domain resource corresponding to the sidelink grant according to a first method; where the first method includes: determining DRX configuration information corresponding to the sidelink logical channel according to the sidelink destination identity corresponding to the sidelink logical channel; determining whether the sidelink logical channel is in the active time of the sidelink discontinuous transmission on the time domain resource corresponding to the sidelink grant according to the DRX configuration information; or, determining the DRX configuration information corresponding to the sidelink logical channel according to a quality of service (QoS) parameter corresponding to the sidelink logical channel; determining whether the sidelink logical channel is in the active time of sidelink discontinuous transmission on the time domain resource corresponding to the sidelink grant according to the DRX configuration information.

Optionally, the obtaining the sidelink destination identity in the active time of the sidelink discontinuous transmission on the time domain resource corresponding to the sidelink grant includes: obtaining the sidelink destination identity in the active time of the sidelink discontinuous transmission on the time domain resource corresponding to the sidelink grant according to a second method; where the second method includes: determining DRX configuration information corresponding to the sidelink destination identity according to a first address; determining whether the sidelink destination identity is in the active time of the sidelink discontinuous transmission on the time domain resource corresponding to the sidelink grant according to the DRX configuration information; the first address includes the sidelink destination identity, or a combination of a sidelink source identity and the sidelink destination identity; or, determining a QoS parameter corresponding to the sidelink logical channel according to the sidelink logical channel corresponding to the sidelink destination identity; determining the DRX configuration information corresponding to the QoS parameter according to the QoS parameter; determining whether the sidelink logical channel is in the active time of the sidelink discontinuous transmission on the time domain resource corresponding to the sidelink grant according to the DRX configuration information; determining, in a case that at least one sidelink logical channel corresponding to the sidelink destination identity is in the active time of the sidelink discontinuous transmission on the time domain resource corresponding to the sidelink grant, that the sidelink destination identity is in the active time of the sidelink discontinuous transmission on the time domain resource corresponding to the sidelink grant.

An embodiment of the present disclosure also provides a processor-readable storage medium, where a computer program is stored in the processor-readable storage medium, and the computer program is configured to cause the processor to execute the above-mentioned resource allocation method.

The beneficial effects of the aforementioned technical solutions in the present disclosure are as follows: in the above solutions, the resource allocation method includes obtaining a sidelink destination identity and/or one or more sidelink logical channels which are in active time of a sidelink discontinuous transmission on a time domain resource corresponding to a sidelink grant; performing resource allocation according to the sidelink destination identity and/or the one or more sidelink logical channels, where the active time of sidelink discontinuous transmission includes: an active time of a sidelink discontinuous reception (DRX) and/or an active time of a sidelink discontinuous transmission (DTX), which can avoid the situation that the sidelink transmission terminal selects the destination or LCH that is currently in the DRX and/or DTX silent period on the time domain resource corresponding to the sidelink grant, resulting in waste of resources; thereby realizing effective resource allocation on the sidelink interface, and solving the problem of resource waste in the resource allocation scheme for the sidelink interface in the related art.

BRIEF DESCRIPTION OF THE DRAWINGS

FIG. 1 is a schematic view of Sidelink discovery or communication in the related art;
FIG. 2 is a schematic view of a radio communication system architecture according to an embodiment of the present disclosure;
FIG. 3 is a schematic view of a cellular communication network according to an embodiment of the present disclosure;
FIG. 4 is a schematic view of a cellular network DRX procedure according to an embodiment of the present disclosure;
FIG. 5 is a flowchart of a resource allocation method according to an embodiment of the present disclosure;
FIG. 6 is a schematic structural view of a terminal according to an embodiment of the present disclosure; and
FIG. 7 is a schematic structural view of a resource allocation apparatus according to an embodiment of the present disclosure.

DETAILED DESCRIPTION

The technical solutions in the embodiments of the present disclosure will be clearly and completely described below with reference to the drawings in the embodiments of the present disclosure, obviously, the described embodiments are only some of the embodiments in the present disclosure, rather than all of embodiments. Based on the embodiments in the present disclosure, all other embodiments obtained by those ordinarily skilled in the art without making creative efforts belong to the protection scope of the present disclosure.

The term "and/or" in the embodiments of the present disclosure describes the association relationship of associated objects, indicating that there may be three relationships, for example, A and/or B, which may represent these three situations: A exists alone, A and B exist simultaneously, and B exists alone. The character "/" generally indicates that the contextual objects are an "or" relationship.

The term "plurality" in the embodiments of the present disclosure refers to two or more, and other quantifiers are similar.

It should be noted here that the technical solution provided by the embodiments of the present disclosure can be applied to various systems, especially a fifth-generation mobile communication technology (5th Generation Mobile Communication Technology, 5G) system. For example, the applicable system may be global system of mobile communication (GSM) system, code division multiple access (Code Division Multiple Access, CDMA) system, wideband code division multiple access (Wideband Code Division Multiple Access, WCDMA) general packet radio service (General Packet Radio Service, GPRS) system, long term evolution (Long Term Evolution, LTE) system, LTE frequency division duplex (Frequency Division Duplex, FDD) system, LTE time division duplex (Time Division Duplex, TDD) system, long term evolution advanced (Long Term Evolution Advanced, LTE-A) system, universal mobile telecommunications system (Universal Mobile Telecommunications System, UMTS), worldwide interoperability for microwave access (Worldwide interoperability for Microwave Access, WiMAX) system, 5G new radio (New Radio, NR) system, etc. These various systems include terminals and network-side devices. The system may also include a core network part, such as an evolved packet system (Evolved Packet System, EPS), a 5G system (5G System, 5GS), and the like.

FIG. 2 shows a block view of a radio communication system applicable to the embodiment of the present disclosure. The radio communication system includes a terminal and a network side device.

The terminal involved in the embodiments of the present disclosure may be a device that provides voice and/or data connectivity to a user, a handheld device with a radio connection function, or other processing devices connected to a radio modem. In different systems, the name of the terminal may be different, for example, in a 5G system, the terminal may be called as user equipment (User Equipment, UE). The radio terminal can communicate with one or more core networks (Core Network, CN) via the radio access network (Radio Access Network, RAN), and the radio terminal may be a mobile terminal, such as a mobile phone (or called a "cellular" phone) and a computer with a mobile terminal, such as portable, pocket, hand-held, built-in computer or vehicle-mounted mobile apparatuses, which exchange language and/or data with the radio access network. For example, personal communication service (Personal Communication Service, PCS) phone, cordless phone, session initiated protocol (Session Initiated Protocol, SIP) phone, wireless local loop (Wireless Local Loop, WLL) station, personal digital assistant (Personal Digital Assistant, PDA) and other devices. The radio terminal may also be called system, a subscriber unit, a subscriber station, a mobile station, a mobile, a remote station, an access point, a remote terminal device (remote terminal), an access terminal device (access terminal), a user terminal device (user terminal), a user agent, and a user device, which are not limited in the embodiments of the present disclosure.

The network side device involved in the embodiments of the present disclosure may be a base station, and the base station may include a plurality of cells that provide services for terminals. Depending on the specific application occasion, the base station can also be called as an access point, or may be a device in an access network that communicates with a radio terminal over an air interface through one or more sectors, or other names. The network side device may be used to exchange received air frames with internet protocol (Internet Protocol, IP) packets, and act as a router between the radio terminal and the rest of the access network, where the rest of the access network may include IP communication network. The network side device may also coordinate attribute management of the air interface. For example, the network side device involved in the embodiments of the present disclosure may be a network device (Base Transceiver Station, BTS) in global system for mobile communications (Global System for Mobile communications, GSM) or code division multiple access (Code Division Multiple Access, CDMA), may also be a network device (NodeB) in wide-band code division multiple access (Wide-band Code Division Multiple Access, WCDMA), or an evolutional network device (evolutional Node B, eNB or e-NodeB) in a long term evolution (long term evolution, LTE) system, a 5G base station (NR Node B, gNB) in a 5G network architecture (next generation system), may also be a home evolved base station (Home evolved Node B, HeNB), a relay node (relay node), a home base station (femto), a pico base station (pico), etc., which are not limited in this embodiment of the present disclosure. In some network structures, the network side device may include a centralized unit (centralized unit, CU) node and a distributed unit (distributed unit, DU) node, and the centralized unit and the distributed unit may also be arranged geographically separately.

One or more antennas may be used between the network side device and the terminal for Multi Input Multi Output (Multi Input Multi Output, MIMO) transmission, and MIMO transmission may be Single User MIMO (Single User MIMO, SU-MIMO) or Multiple User MIMO (Multiple User MIMO, MU-MIMO). According to the shape and quantity of root antenna combinations, MIMO transmission may be two-dimensional multiple-input multiple-output (2 Dimension MIMO, 2D-MIMO), three-dimensional multiple-input multiple-output (3 Dimension MIMO, 3D-MIMO), full-dimensional multiple-input multiple-output (Full Dimension MIMO, FD-MIMO) or massive multiple-input multiple-output (massive-MIMO), or diversity transmission or precoding transmission or beamforming transmission, etc.

The content involved in the solutions provided by the embodiments of the present disclosure will be firstly introduced below.

(1) Cellular network communication:

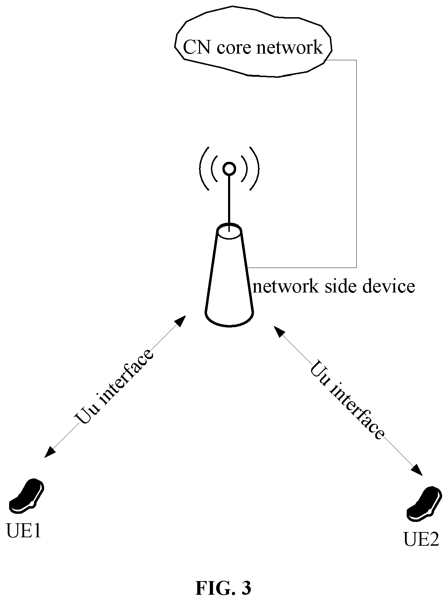

In cellular network communication, uplink or downlink data and control information are transmitted between the terminal and the network side device through the Uu interface, see FIG. 3 for details.

(2) The Discontinuous Reception (DRX) mechanism of the Uu interface of the cellular communication system:

In a mobile communication system based on shared channel, such as LTE, the transmission of uplink and downlink data is controlled by the eNB scheduler, when the scheduler determines to schedule a certain user, the scheduler will notify the terminal of which/what kind of resource(s) to send or receive data through the control channel. The UE monitors the control channel, when detecting that it contains its own scheduling information, the UE completes data transmission (uplink) or reception (downlink) according to the instructions on the control channel. In the activated state, since the terminal does not determine when the eNB will schedule itself, a common working mode is that the terminal continuously monitors the control channel, and analyzes each subframe containing its downlink scheduling control channel to determine whether it has been scheduled. This working mode can achieve higher efficiency in a case that the amount of terminal data is large and may be frequently scheduled. However, for some services, the arrival frequency of data is lower, resulting in a small number of times the terminal is scheduled. If the terminal still continuously monitors the control channel, it will unnecessarily increase its power consumption. In order to solve the power consumption problem, the cellular network communication system adopts the DRX working mode. In this working mode, the terminal periodically monitors the control channel, thereby achieving the purpose of saving power.

Regarding the basic principle of DRX:

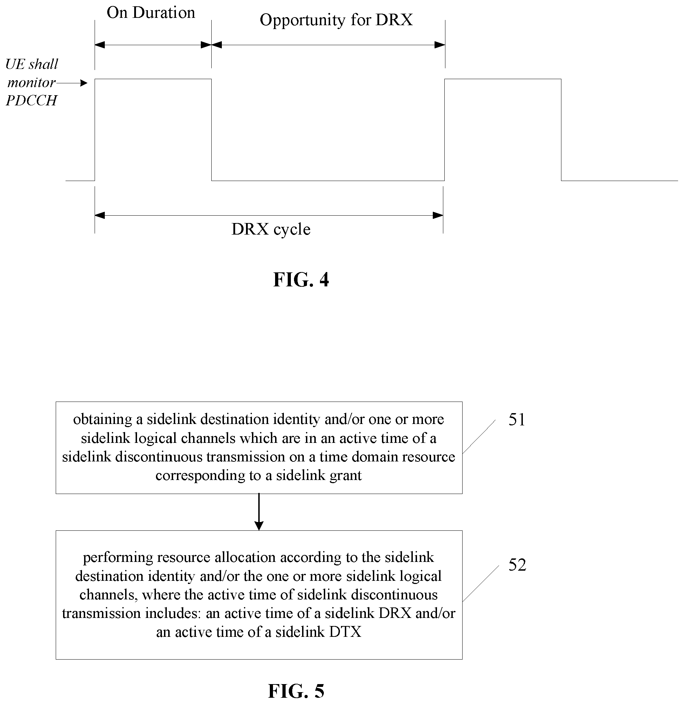

The basic principle of DRX is shown in FIG. 4, where the on duration (On duration) indicates the time period during which the UE monitors the control channel, during which the radio frequency channel is opened and the control channel is continuously monitored. In the course of other time durations than On duration, the UE is in sleep (Sleep) state (also called as inactive period or silent period), its radio frequency link will be turned off, and the control channel will no longer be monitored to achieve the purpose of power saving. On Duration appears periodically according to the DRX cycle (Cycle) in the figure, and the specific cycle is implemented by eNB configuration. The UE should monitor PDCCH in the figure indicates that the UE will monitor the downlink control channel (Physical Downlink Control Channel, PDCCH); the DRX opportunity (Opportunity for DRX) indicates other time durations than On duration.

The arrival model of data service is considered for the DRX mechanism of the cellular network, that is, the arrival of data packet is sudden (it can be understood that once a data packet arrives, more packets will arrive continuously in a short period of time). In order to adapt to this service arrival characteristic, the LTE DRX procedure uses a variety of timers to combine with the Hybrid Automatic Repeat Request (Hybrid Automatic Repeat Request, HARQ) procedure for achieving better power-saving performance.

Regarding DRX related timers:

1) DRX-on duration timer (drx-on Duration Timer): UE periodically wakes up to monitor the time of control channel, as shown in FIG. 4.

2) Short DRX cycle timer (Short DRX cycle Timer): In order to better meet the characteristics of data service arrival, the cellular network communication system supports the configuration of two DRX cycles: long (Long) cycle and Short cycle. The on duration timers of the two cycles are the same, but the sleep times are different. In the Short cycle, the sleep time is relatively shorter, and the UE can monitor the control channel again faster. The Long cycle must be configured and is the initial state of the DRX procedure; the Short cycle is optional. The Short DRX cycle timer is set with the duration of the Short cycle. After the Short cycle timer expires, the UE will use the Long cycle.

3) DRX inactivity timer (drx-InactivityTimer): After DRX is configured, when the UE receives the control signaling of HARQ initial transmission within the time allowed to monitor the control channel (that is, the time during which the UE monitors the control channel (Active Time)), the timer is turned on, before the timer expires, the UE continuously monitors the control channel. If the UE receives the control signaling of HARQ initial transmission before the drx-Inactivity Timer expires, UE will terminate and restart the drx-Inactivity Timer.

4) HARQ round-trip time delay (Round-Trip Time, RTT) timer (HARQ RTT Timer): divided into DRX HARQ downlink (DownLink, DL) round-trip time delay timer (drx-HARQ-RTT-Timer DL) and DRX HARQ uplink (UpLink, UL) round-trip time delay timer (drx-HARQ-RTT-Timer UL), the purpose is to make it possible for the UE not to monitor the control channel before the next retransmission arrives, so as to achieve a better power saving effect. The downlink is taken as an example, this timer will be turned on when the first symbol starts after the transmission of the uplink control channel (Physical Uplink Control Channel, PUCCH) of the UE related procedure. If the data in the corresponding HARQ procedure is unsuccessfully decoded after the previous HARQ transmission (for example, the UE feedbacks a negative response (Negative-Acknowledgment, NACK)), after the drx-HARQ-RTT-Timer DL expires, the UE turns on the DRX downlink retransmission timer (drx-RetransmissionTimer DL). If the data in the corresponding HARQ procedure is successfully decoded after the previous HARQ transmission (for example, UE feedbacks a response (Acknowledgment, ACK)), after the drx-HARQ-RTT-Timer DL timer expires, the UE does not start drx-Retransmission Timer DL. If only drx-HARQ-RTT-Timer DL is currently running, the UE does not monitor the control channel.

5) HARQ retransmission timer (HARQ retransmission Timer): divided into DRX downlink retransmission timer (drx-Retransmission Timer DL) and DRX uplink retransmission timer (drx-Retransmission Timer UL). The downlink is taken as an example. During the operation of the drx-Retransmission Timer DL, the UE monitors the control signaling and waits for the retransmission scheduling of the corresponding HARQ procedure.

Regarding the definition of Active time under DRX:

It can be seen from the above-mentioned procedure that if any of the On duration Timer, HARQ retransmission Timer and Inactivity Timer is running, the UE will monitor the control channel. The time during which the UE monitors the control channel is also called Active Time. In the LTE system, the Active Time is affected by other factors besides the DRX timer. The Active Time of the UE includes the following time:

1) The running time of drx-on Duration Timer or drx-Inactivity Timer or drx-Retransmission Timer DL or drx-Retransmission Timer UL or random access contention resolution timer (ra-Contention Resolution Timer);

2) The time for the UE to wait for the base station to send the PDCCH after sending the uplink scheduling request (Scheduling Request, SR);

3) The time for the non-contention random access UE to wait for the PDCCH scheduled by cell radio network temporary identity (Cell Radio Network Temporary Identity, C-RNTI) after receiving the random access response (Random Access Response, RAR).

Regarding on duration calculation under DRX:

For Short DRX cycle, the calculation formula of on duration is as follows:

$$[(\text{SFN} \times 10) + \text{subframe number}] \text{ modulo } (\text{shortDRX-Cycle}) = (\text{drxStartOffset}) \text{ modulo } (\text{shortDRX-Cycle});$$

For long DRX cycle, the calculation formula of on duration is as follows:

$$[(\text{SFN} \times 10) + \text{subframe number}] \text{ modulo } (\text{longDRX-Cycle}) = \text{drxStartOffset};$$

where
System Frame Number (System Frame Number, SFN): indicates the SFN index number of the current radio frame;
Subframe number: indicates the index number of the current subframe;
shortDRX-Cycle: indicates a short DRX cycle;
longDRX-Cycle: indicates a long DRX cycle;
drxStartOffset: indicates an offset value for radio resource control (Radio Resource Control, RRC) signaling configuration.
modulo represents the modulo operation.

Regarding the basic principles of sidelink interface DRX and discontinuous transmission (Discontinuous Transmission, DTX):

1) For the sidelink interface unicast communication, the granularity of the sidelink interface DRX and DTX are both: the combination of each sidelink source identity and sidelink destination identity.
2) For sidelink broadcast or groupcast communication, the granularity of sidelink DRX and DTX has not yet been determined. The possible granularity is: the quality of service (Quality of Service, QoS) identifier (ProSe QoS Identifier, PQI) or a set of PQIs of the sidelink interface based on the sidelink logical channel.

Based on the above, the embodiments of the present disclosure provide a resource allocation method, a resource allocation apparatus, and a terminal, so as to solve the problem of resource waste in resource allocation schemes for sidelink interfaces in the related art, where the method, apparatus and terminal are conceived based on the same application. Since the method, apparatus, and terminal have similar principles for solving problems, implementations of the method, apparatus, and terminal may be referred to each other, and repeated descriptions will not be repeated.

The resource allocation method (applicable to a terminal) provided by the embodiment of the present disclosure, as shown in FIG. 5, includes:

Step 51: obtaining a sidelink destination identity and/or one or more sidelink logical channels which are in active time of a sidelink discontinuous transmission on a time domain resource corresponding to a sidelink grant.

The sidelink grant here may specifically be the sidelink grant for the terminal.

Step 52: performing resource allocation according to the sidelink destination identity and/or the one or more sidelink logical channels, where the active time of sidelink discontinuous transmission includes: an active time of a sidelink discontinuous reception (DRX) and/or an active time of a sidelink discontinuous transmission (DTX).

The resource allocation method provided by the embodiments of the present disclosure includes: obtaining a sidelink destination identity and/or one or more sidelink logical channels which are in active time of a sidelink discontinuous transmission on a time domain resource corresponding to a sidelink grant; performing resource allocation according to the sidelink destination identity and/or the one or more sidelink logical channels, where the active time of sidelink discontinuous transmission includes: an active time of a sidelink discontinuous reception (DRX) and/or an active time of a sidelink discontinuous transmission (DTX), which can avoid the situation that the sidelink transmission terminal selects the destination or LCH that is currently in the DRX and/or DTX silent period on the time domain resource corresponding to the sidelink grant, resulting in waste of resources; thereby realizing effective resource allocation on the sidelink interface, and solving the problem of resource waste in the resource allocation scheme for the sidelink interface in the related art.

The obtaining the sidelink destination identity in the active time of the sidelink discontinuous transmission on the time domain resource corresponding to the sidelink grant, includes: obtaining the sidelink destination identity in the active time of the sidelink discontinuous transmission on the time domain resource corresponding to the sidelink grant according to a first condition, where the first condition includes at least one of the following: the sidelink destination identity is in the active time of sidelink discontinuous transmission on the time domain resource corresponding to the sidelink grant; or at least one sidelink logical channel of all the sidelink logical channels corresponding to the sidelink destination identity is in the active time of sidelink discontinuous transmission on the time domain resource corresponding to the sidelink grant.

This ensures that the selected sidelink destination identity is a qualified and suitable sidelink destination identity.

Further, optionally, after the obtaining the sidelink destination identity in the active time of the sidelink discontinuous transmission on the time domain resource corresponding to the sidelink grant, the above method further includes: selecting a target sidelink logical channel out of the sidelink logical channels corresponding to the sidelink destination identity according to a second condition, where the second condition includes: the sidelink logical channel is in the active time of sidelink discontinuous transmission on the time domain resource corresponding to the sidelink grant.

In this way, it can be ensured that the DRX state and/or DTX state corresponding to the selected logical channel at the current moment will not be a silent period, so as to avoid waste of resources.

In an embodiment of the present disclosure, the obtaining the sidelink logical channel in the active time of the sidelink discontinuous transmission on the time domain resource corresponding to the sidelink grant includes: obtaining the sidelink logical channel in the active time of the sidelink discontinuous transmission on the time domain resource corresponding to the sidelink grant according to a first method; where the first method includes: determining DRX configuration information corresponding to the sidelink logical channel according to the sidelink destination identity corresponding to the sidelink logical channel; determining whether the sidelink logical channel is in the active time of the sidelink discontinuous transmission on the time domain resource corresponding to the sidelink grant according to the DRX configuration information; or, determining the DRX configuration information corresponding to the sidelink logical channel according to a quality of service (QoS) parameter corresponding to the sidelink logical channel; determining whether the sidelink logical channel is in the active time of sidelink discontinuous transmission on the time domain resource corresponding to the sidelink grant according to the DRX configuration information.

The sidelink logical channel in "determining the DRX configuration information corresponding to the sidelink logical channel according to the sidelink destination identity corresponding to the sidelink logical channel" may specifically be the logical channel on the current sidelink interface of the terminal. The sidelink logical channel in "determining the DRX configuration information corresponding to the sidelink logical channel according to the quality of service (QoS) parameter corresponding to the sidelink logical channel" may specifically be the logical channel on the current sidelink interface of the terminal.

In an embodiment of the present disclosure, the obtaining the sidelink destination identity in the active time of the sidelink discontinuous transmission on the time domain resource corresponding to the sidelink grant includes: obtaining the sidelink destination identity in the active time of the sidelink discontinuous transmission on the time domain resource corresponding to the sidelink grant according to a second method; where the second method includes: determining DRX configuration information corresponding to the sidelink destination identity according to a first address; determining whether the sidelink destination identity is in the active time of the sidelink discontinuous transmission on the time domain resource corresponding to the sidelink grant according to the DRX configuration information; the first address includes the sidelink destination identity, or a combination of a sidelink source identity and the sidelink destination identity; or, determining a QoS parameter corresponding to the sidelink logical channel according to the sidelink logical channel corresponding to the sidelink destination identity; determining the DRX configuration information corresponding to the QoS parameter according to the QoS parameter; determining whether the sidelink logical channel is in the active time of the sidelink discontinuous transmission on the time domain resource corresponding to the sidelink grant according to the DRX configuration information; determining, in a case that at least one sidelink logical channel corresponding to the sidelink destination identity is in the active time of the sidelink discontinuous transmission on the time domain resource corresponding to the sidelink grant, that the sidelink destination identity is in the active time of the sidelink discontinuous transmission on the time domain resource corresponding to the sidelink grant.

The resource allocation method provided by the embodiments of the present disclosure will be further described below.

In view of the above-mentioned technical problems, it is considered that in order to realize the power saving of the sidelink interface, the DRX mechanism is introduced for the sidelink interface; the introduction of the DRX mechanism for the sidelink interface will have a certain impact on the resource allocation of the sidelink interface. To this end, the embodiment of the present disclosure provides a resource allocation method, which may be specifically implemented as a sidelink interface resource allocation method. Through this method, more effective resource allocation can be implemented on the sidelink interface, and resource waste can be avoided to a great extent.

This solution mainly involves: when the sidelink terminal executes LCP for the Sidelink grant (grant), that is, when performing the resource allocation, the sidelink interface destination and/or the one or more sidelink logical channels in the Sidelink DRX and/or DTX active time (active time, that is, the time when the UE monitors the control channel) on the time domain resource corresponding to the Sidelink grant are only considered.

Specially:

1. In the performing the sidelink interface destination selected step during the LCP procedure, the specific implementation of "only considering the destination (corresponding to the above-mentioned obtaining a sidelink destination identity which are in active time of a sidelink grant discontinuous transmission on a time domain resource corresponding to a sidelink grant) is in the Sidelink DRX and/or DTX active time on the time domain resource corresponding to the Sidelink grant" may be one of the following or a combination (corresponding to the above-mentioned first condition, obtaining the sidelink destination identity which are in active time of a sidelink discontinuous transmission on a time domain resource corresponding to a sidelink grant):

(1) adding the restricted condition when selecting the destination: the selected destination in the (Sidelink) DRX and/or DTX active time on the time domain resource corresponding to the Sidelink grant is restricted;
(2) adding the restricted condition when selecting the destination: when selecting the destination, the sidelink logical channel in the (Sidelink) DRX and/or DTX active time on the time domain resource corresponding to the Sidelink grant in all sidelink logical channels corresponding to destination is only considered.

2. Optionally, in the step of selecting one or more sidelink logical channels in the selected destination during the LCP procedure, the specific implementation of "only considering the sidelink logical channel in the Sidelink DRX and/or DTX active time on the time domain resource corresponding to the Sidelink grant" may be as following of: adding a restricted condition, when selecting the sidelink logical channel in the selected destination: restricting the selected sidelink logical channel in the (Sidelink) DRX and/or DTX active time on the time domain resource corresponding to the Sidelink grant. Corresponding to the above-mentioned second condition, a target sidelink logical channel is selected from the sidelink logical channel corresponding to the sidelink destination identity.

3. For above 1 or 2, the determination method (corresponding to the above-mentioned first method) of "the sidelink logical channel is in DRX and/or DTX active time on the time domain resource corresponding to the Sidelink grant" may be one of the following:

(1) determining the DRX configuration (that is, DRX configuration information) corresponding to the sidelink logical channel according to the destination corresponding to the sidelink logical channel, and then determining whether the sidelink logical channel is in the (Sidelink) DRX and/or DTX active time on the time domain resource corresponding to the Sidelink grant according to the DRX configuration.
(2) determining the DRX configuration corresponding to the sidelink logical channel according to the QoS parameter (such as PQI) corresponding to the sidelink logical channel, and then determining whether the sidelink logical channel is in the (Sidelink) DRX and/or DTX active time on the time domain resource corresponding to the Sidelink grant according to the DRX configuration.

4. For above 1, the determination method (corresponding to the above-mentioned second method) of "destination in the DRX and/or DTX active time on the time domain resource corresponding to the Sidelink grant" may be one of the following:

(1) determining the DRX configuration corresponding to the destination according to the first address, and then determining whether the destination is in the (Sidelink) DRX and/or DTX active time on the time domain resource corresponding to the Sidelink grant according to the DRX configuration, where the first address includes destination, or a combination of the sidelink source identity and destination.
(2) determining the QoS parameter (such as PQI) corresponding to the sidelink logical channel according to the sidelink logical channel corresponding to the destination, then determining the DRX configuration corresponding to the QoS parameter according to the QoS parameter, and then determining whether the sidelink logical channel is in the (Sidelink) DRX and/or DTX active time on the time domain resource corresponding to the Sidelink grant according to the DRX configuration; determining, in a case that at least one sidelink logical channel corresponding to the destination is in the active time of the sidelink discontinuous transmission on the time domain resource corresponding to the sidelink grant, that the destination is in the active time of the sidelink discontinuous transmission on the time domain resource corresponding to the sidelink grant.

The resource allocation procedure (that is, the LCP procedure) of the sidelink interface provided by the embodiment of the present disclosure is described below with examples.

Example 1:

Step 1: selecting the sidelink logical channel;

This step is further subdivided into the following two steps:
Step 1.1: selecting the sidelink interface destination of sidelink;
In this step, when the terminal receives the sidelink interface scheduling information (Sidelink Scheduling Information, SCI) for new data transmission, whether its corresponding destination is in the DRX and/or DTX active time and the highest priority MAC CE or sidelink logical channel on the time domain resource corresponding to the Sidelink grant is firstly determined from the media access control (MAC) control element (CE) corresponding to all communication types (including unicast (unicast), groupcast (groupcast) and broadcast (broadcast)) of the sidelink interface and the sidelink logical channel meeting the specific conditions, where the destination identity corresponding to the MAC CE with the highest priority or the sidelink logical channel is used as the selected sidelink destination identity. The specific conditions that the sidelink logical channel needs to meet include:

(1) the sidelink logical channel has sidelink data available; and,
(2) $SB_j > 0$ ($SB_j$ is the quantity of tokens in the token bucket corresponding to the sidelink logical channel); and,
(3) if the Sidelink grant is a type (Type) 1 type of preconfigured grant (Configured Grant, CG), the sidelink logical channel needs to be configured to allow Sidelink grant to be configured as Type 1 (sl-configured Grant Type1 Allowed) and the value of sl-configured Grant Type1 Allowed is set to be true (true); and,
(4) if the sidelink logical channel is configured with a Sidelink-allowed preconfigured grant-list (sl-Allowed CG-List), the sl-Allowed CG-List needs to include the index number of the Sidelink CG corresponding to the current Sidelink grant; and,
(5) if the Sidelink grant corresponding to the SCI is not configured with a physical layer sidelink feedback channel (Physical sidelink feedback channel, PSFCH), then the Sidelink HARQ feedback (sl-HARQ-Feedback) corresponding to the sidelink logical channel is enabled (Enabled) to be set to be disabled (disabled).

If a plurality of destination identities meets the above-mentioned conditions simultaneously, which destination identity to be specially selected depends on the implementation of the terminal.
Specifically, the determination method of "destination is in the DRX and/or DTX active time on the time domain resource corresponding to the Sidelink grant" may be one of the following:

(1) determining the DRX configuration corresponding to the destination according to the first address, and then determining whether the destination is in the DRX and/or DTX active time on the time domain resource corresponding to the Sidelink grant according to the DRX configuration, where the first address includes destination, or a combination of the sidelink source identity and destination.
(2) determining the QoS parameter (such as PQI) corresponding to the sidelink logical channel according to the sidelink logical channel corresponding to the destination, then determining the DRX configuration corresponding to the QoS parameter according to the QoS parameter, and then determining whether the sidelink logical channel is in the DRX and/or DTX active time on the time domain resource corresponding to the Sidelink grant according to the DRX configuration; determining, in a case that at least one sidelink logical channel corresponding to the destination is in the active time of the sidelink discontinuous transmission on the time domain resource corresponding to the sidelink grant, that the destination is in the active time of the sidelink discontinuous transmission on the time domain resource corresponding to the sidelink grant.

Step 1.2: Selecting one or more sidelink logical channels that meets the following conditions out of the sidelink logical channel corresponding to destination identity selected in step 1.1:

(1) the sidelink logical channel is in the DRX and/or DTX active time on the time domain resource corresponding to the Sidelink grant (it can be further defined, only when the communication mode (cast type) corresponding to the Sidelink grant is unicast, it does not need to execute this step, this step is only required if the cast type corresponding to the Sidelink grant is broadcast and/or groupcast); and,

(2) the sidelink logical channel has sidelink data available; and,

(3) if the Sidelink grant is a type 1 CG, the sidelink logical channel needs to be configured with sl-configured Grant Type1 Allowed and the value of sl-configured Grant Type1 Allowed is set to be true; and,

(4) if the sidelink logical channel is configured with sl-Allowed CG-List, the sl-Allowed CG-List needs to include the index number of the Sidelink CG corresponding to the current Sidelink grant; and,

(5) if the Sidelink grant corresponding to the SCI is not configured with PSFCH, the sl-HARQ-Feedback Enabled corresponding to the sidelink logical channel needs to be set to be disabled; and,

    1) if the Sidelink grant corresponding to SCI is configured with PSFCH:

        if the sl-HARQ-Feedback Enabled corresponding to the sidelink logical channel with the highest priority that meets the above-mentioned conditions (the first few conditions before this condition) is enabled, the sidelink logical channel to be selected also needs to meet the condition that its sl-HARQ-Feedback Enabled is enabled; or,

        if the sl-HARQ-Feedback Enabled corresponding to the sidelink logical channel with the highest priority that meets the above-mentioned conditions (the first few conditions before this condition) is disabled, the sidelink logical channel to be selected also needs to meet the condition that its sl-HARQ-Feedback Enabled is disabled.

    2) Otherwise (the Sidelink grant corresponding to SCI is not configured with PSFCH):

    the value of sl-HARQ-Feedback Enabled of the sidelink logical channel needs to be set to be disabled.

Specifically, the determination method of "the sidelink logical channel is in the DRX and/or DTX active time on the time domain resource corresponding to the Sidelink grant" may be one of the following:

(1) determining the DRX configuration corresponding to the sidelink logical channel according to the destination corresponding to the sidelink logical channel, and then determining whether the sidelink logical channel is in the DRX and/or DTX active time on the time domain resource corresponding to the Sidelink grant according to the DRX configuration.

(2) determining the DRX configuration corresponding to the sidelink logical channel according to the QoS parameter (such as PQI) corresponding to the sidelink logical channel, and then determining whether the sidelink logical channel is in the DRX and/or DTX active time on the time domain resource corresponding to the Sidelink grant according to the DRX configuration.

Step 2: performing resource allocation for the sidelink logical channel selected in step 1 (in this example); The specific procedure is as follows:

Step 2.1: for the sidelink logical channel with SBj>0 selected in step 1, allocating the resources to the sidelink interface prioritized bit rate (sidelink Prioritized Bit Rate, sPBR) in sequence according to the priority descending order of the sidelink logical channel. If the sPBR corresponding to a certain sidelink logical channel is set to infinite, the MAC entity allocates the resources for all data of the sidelink logical channel.

Step 2.2: updating, according to step 2.1, the SBj corresponding to each sidelink logical channel.

Step 2.3: performing, in a case that there are still resources remaining, the resource allocation in sequence strictly accordance with the priority order of all sidelink logical channels determined in step 1, until all data of the sidelink logical channels are allocated resources or resources are exhausted. Sidelink logical channels of the same priority should be treated fairly.

Example 2:

Step 1: selecting the sidelink logical channel; this step is further subdivided into the following two procedurees:

Step 1.1 selecting the sidelink interface destination of sidelink;

In this step, when the terminal receives the SCI for new data transmission, the highest priority MAC CE or sidelink logical channel is firstly determined from MAC CE corresponding to all communication types (including unicast (unicast), groupcast (groupcast) and broadcast (broadcast)) of the sidelink interface and the sidelink logical channel meeting the specific conditions, where the destination identity corresponding to the MAC CE with the highest priority or the sidelink logical channel is used as the selected sidelink destination identity. The specific conditions that the sidelink logical channel needs to meet include:

(1) the sidelink logical channel is in the DRX and/or DTX active time on the time domain resource corresponding to the Sidelink grant;
(2) the sidelink logical channel has sidelink data available; and,
(3) SBj > 0; and,
(4) if the Sidelink grant is a type 1 of CG, the sidelink logical channel needs to be configured with sl-configured Grant Type1 Allowed and the value of sl-configured Grant Type1 Allowed is set to be true; and,
(5) if the sidelink logical channel is configured with a sl-Allowed CG-List, the sl-Allowed CG-List needs to include the index number of the Sidelink CG corresponding to the current Sidelink grant; and,
(6) if the Sidelink grant corresponding to the SCI is not configured with a PSFCH, then the sl-HARQ-Feedback Enabled corresponding to the sidelink logical channel need be set to be disabled.

If a plurality of destination identities meets the above-mentioned conditions simultaneously, which destination identity to be specially selected depends on the implementation of the terminal.

Specifically, the determination method of "the sidelink logical channel is in the DRX and/or DTX active time on the time domain resource corresponding to the Sidelink grant" may be one of the following:

(1) determining the DRX configuration corresponding to the sidelink logical channel according to the destination corresponding to the sidelink logical channel, and then determining whether the sidelink logical channel is in the DRX and/or DTX active time on the time domain resource corresponding to the Sidelink grant according to the DRX configuration.
(2) determining the DRX configuration corresponding to the sidelink logical channel according to the QoS parameter (such as PQI) corresponding to the sidelink logical channel, and then determining whether the sidelink logical channel is in the DRX and/or DTX active time on the time domain resource corresponding to the Sidelink grant according to the DRX configuration.

Step 1.2: Selecting one or more sidelink logical channels that meets the following conditions out of the sidelink logical channel corresponding to destination identity selected in step 1.1:

(1) the sidelink logical channel is in the DRX and/or DTX active time on the time domain resource corresponding to the Sidelink grant (it can be further defined, only when the cast type corresponding to the Sidelink grant is unicast, it does not need to execute this step, this step is only required if the cast type corresponding to the Sidelink grant is broadcast and/or groupcast); and,
(2) the sidelink logical channel has sidelink data available; and,
(3) if the Sidelink grant is a type 1 CG, the sidelink logical channel needs to be configured with sl-configured Grant Type1 Allowed and the value of sl-configured Grant Type1 Allowed is set to be true; and,
(4) if the sidelink logical channel is configured with sl-Allowed CG-List, the sl-Allowed CG-List needs to include the index number of the Sidelink CG corresponding to the current Sidelink grant; and,
(5) if the Sidelink grant corresponding to the SCI is not configured with PSFCH, the sl-HARQ-Feedback Enabled corresponding to the sidelink logical channel needs to be set to be disabled; and,

1) if the Sidelink grant corresponding to SCI is configured with PSFCH:

if the sl-HARQ-Feedback Enabled corresponding to the sidelink logical channel with the highest priority that meets the above-mentioned conditions (the first few conditions before this condition) is enabled, the sidelink logical channel to be selected also needs to meet the condition that its sl-HARQ-Feedback Enabled is enabled; or,
if the sl-HARQ-Feedback Enabled corresponding to the sidelink logical channel with the highest priority that meets the above-mentioned conditions (the first few conditions before this condition) is disabled, the sidelink logical channel to be selected also needs to meet the condition that its sl-HARQ-Feedback Enabled is disabled.

2) Otherwise (the Sidelink grant corresponding to SCI is not configured with PSFCH):
the value of sl-HARQ-Feedback Enabled of the sidelink logical channel needs to be set to be disabled.

Specifically, the determination method of "the sidelink logical channel is in the DRX and/or DTX active time on the time domain resource corresponding to the Sidelink grant" may be one of the following:

(1) determining the DRX configuration corresponding to the sidelink logical channel according to the destination corresponding to the sidelink logical channel, and then determining whether the sidelink logical channel is in the DRX and/or DTX active time on the time domain resource corresponding to the Sidelink grant according to the DRX configuration.

(2) determining the DRX configuration corresponding to the sidelink logical channel according to the QoS parameter (such as PQI) corresponding to the sidelink logical channel, and then determining whether the sidelink logical channel is in the DRX and/or DTX active time on the time domain resource corresponding to the Sidelink grant according to the DRX configuration.

Step 2: performing resource allocation for the sidelink logical channel selected in step 1 (in this example); the specific procedure is as follows:

Step 2.1: for the sidelink logical channel with SBj>0 selected in step 1, allocating the resources to the sPBR in sequence according to the priority descending order of the sidelink logical channel. If the sPBR corresponding to a certain sidelink logical channel is set to be infinite, the MAC entity allocates the resources for all data of the sidelink logical channel.

Step 2.2: updating, according to step 2.1, the SBj corresponding to each sidelink logical channel.

Step 2.3: performing, in a case that there are still resources remaining, the resource allocation in sequence strictly accordance with the priority order of all sidelink logical channels determined in step 1, until all data of the sidelink logical channels are allocated resources or resources are exhausted. Sidelink logical channels of the same priority should be treated fairly.

To sum up, the method for sidelink interface resource allocation provided by the embodiments of the present disclosure can realize more effective resource allocation on the sidelink interface and avoid waste of resources to a great extent.

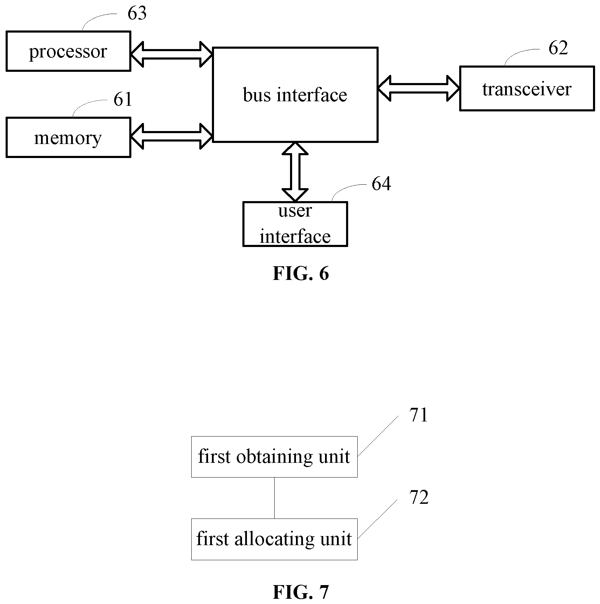

An embodiment of the present disclosure also provides a terminal, as shown in FIG. 6, which includes a memory 61, a transceiver 62, and a processor 63; where the memory 61 is configured to store a computer program; the transceiver 62 is configured to send and receive data under the control of the processor 63; and the processor 63 is configured to read the computer program in the memory 61 and perform the following operations: obtaining a sidelink destination identity and/or one or more sidelink logical channels which are in active time of a sidelink discontinuous transmission on a time domain resource corresponding to a sidelink grant; performing resource allocation according to the sidelink destination identity and/or the one or more sidelink logical channels, where the active time of sidelink discontinuous transmission includes: an active time of a sidelink discontinuous reception (DRX) and/or an active time of a sidelink discontinuous transmission (DTX).

The terminal provided by the embodiments of the present disclosure implements the methods: obtaining a sidelink destination identity and/or one or more sidelink logical channels which are in active time of a sidelink discontinuous transmission on a time domain resource corresponding to a sidelink grant; performing resource allocation according to the sidelink destination identity and/or the one or more sidelink logical channels, where the active time of sidelink discontinuous transmission includes: an active time of a sidelink discontinuous reception (DRX) and/or an active time of a sidelink discontinuous transmission (DTX), which can avoid the situation that the sidelink transmission terminal selects the destination or LCH that is currently in the DRX and/or DTX silent period on the time domain resource corresponding to the sidelink grant, resulting in waste of resources; realize effective resource allocation on the sidelink interface, thereby solving the problem of resource waste in the resource allocation scheme for the sidelink interface in the related art.

In the embodiment of the present disclosure, the transceiver 62 is configured to receive and send data under the control of the processor 63.

In FIG. 6, the bus architecture may include any quantity of interconnected buses and bridges, specifically one or more processors represented by the processor 63 and various circuits of the memory represented by the memory 61 are linked together. The bus architecture can also link together various other circuits such as peripherals, voltage regulators, and power management circuits, etc., which are well known in the art and therefore will not be further described herein. The bus interface provides the interface. Transceiver 62 may be a plurality of elements, which include a transmitter and a receiver, providing means for communicating with various other apparatuses over transmission media, these transmission media include transmission media such as wireless channels, wired channels, and optical cables. For different user equipments, the user interface 64 may also be an interface capable of connecting externally and internally to required equipment, and the connected equipment includes but not limited to a keypad, a display, a speaker, a microphone, a joystick, and the like.

The processor 63 is responsible for managing the bus architecture and general processing, and the memory 61 may store data used by the processor 63 when performing operations.

Optionally, the processor 63 may be a central processing unit (Central Processing Unit, CPU), an application specific integrated circuit (Application Specific Integrated Circuit, ASIC), a field programmable gate array (Field-Programmable Gate Array, FPGA) or a complex programmable logic device (Complex Programmable Logic Device, CPLD), the processor may also adopt a multi-core architecture.

The processor is configured to execute any one of the methods provided by the embodiments of the present disclosure according to the obtained executable instructions by calling the computer program stored in the memory. The processor and memory may also be physically arranged separately.

In the embodiment of the present disclosure, the obtaining the sidelink destination identity in the active time of the sidelink discontinuous transmission on the time domain resource corresponding to the sidelink grant, includes: obtaining the sidelink destination identity in the active time of the sidelink discontinuous transmission on the time domain resource corresponding to the sidelink grant according to a first condition, where the first condition includes at least one of the following: the sidelink destination identity is in the active time of sidelink discontinuous transmission on the time domain resource corresponding to the sidelink grant; or at least one sidelink logical channel of all the sidelink logical channels corresponding to the sidelink destination identity is in the active time of sidelink discontinuous transmission on the time domain resource corresponding to the sidelink grant.

Further, the operations further include: selecting, after the obtaining the sidelink destination identity in the active time of the sidelink discontinuous transmission on the time domain resource corresponding to the sidelink grant, a target sidelink logical channel out of the sidelink logical channels corresponding to the sidelink destination identity according to a second condition, where the second condition includes: the sidelink logical channel is in the active time of sidelink discontinuous transmission on the time domain resource corresponding to the sidelink grant.

The obtaining the sidelink logical channel in the active time of the sidelink discontinuous transmission on the time domain resource corresponding to the sidelink grant includes: obtaining the sidelink logical channel in the active time of the sidelink discontinuous transmission on the time domain resource corresponding to the sidelink grant according to a first method; where the first method includes: determining DRX configuration information corresponding to the sidelink logical channel according to the sidelink destination identity corresponding to the sidelink logical channel; determining whether the sidelink logical channel is in the active time of the sidelink discontinuous transmission on the time domain resource corresponding to the sidelink grant according to the DRX configuration information; or, determining the DRX configuration information corresponding to the sidelink logical channel according to a quality of service (QoS) parameter corresponding to the sidelink logical channel; determining whether the sidelink logical channel is in the active time of sidelink discontinuous transmission on the time domain resource corresponding to the sidelink grant according to the DRX configuration information.

In an embodiment of the present disclosure, the obtaining the sidelink destination identity in the active time of the sidelink discontinuous transmission on the time domain resource corresponding to the sidelink grant includes: obtaining the sidelink destination identity in the active time of the sidelink discontinuous transmission on the time domain resource corresponding to the sidelink grant according to a second method; where the second method includes: determining DRX configuration information corresponding to the sidelink destination identity according to a first address; determining whether the sidelink destination identity is in the active time of the sidelink discontinuous transmission on the time domain resource corresponding to the sidelink grant according to the DRX configuration information; the first address includes the sidelink destination identity, or a combination of a sidelink source identity and the sidelink destination identity; or, determining a QoS parameter corresponding to the sidelink logical channel according to the sidelink logical channel corresponding to the sidelink destination identity; determining the DRX configuration information corresponding to the QoS parameter according to the QoS parameter; determining whether the sidelink logical channel is in the active time of the sidelink discontinuous transmission on the time domain resource corresponding to the sidelink grant according to the DRX configuration information; determining, in a case that at least one sidelink logical channel corresponding to the sidelink destination identity is in the active time of the sidelink discontinuous transmission on the time domain resource corresponding to the sidelink grant, that the sidelink destination identity is in the active time of the sidelink discontinuous transmission on the time domain resource corresponding to the sidelink grant.

What needs to be explained here is that the above-mentioned terminal provided by the embodiment of the present disclosure can implement all the method steps implemented by the above-mentioned method embodiment, and can achieve the same technical effect, parts and beneficial effects in this embodiment that are the same as those in the method embodiment will not be described in detail here.

An embodiment of the present disclosure also provides a resource allocation apparatus, as shown in FIG. 7, which includes: a first obtaining unit 71, configured to obtain a sidelink destination identity and/or one or more sidelink logical channels which are in active time of a sidelink discontinuous transmission on a time domain resource corresponding to a sidelink grant; and a first allocating unit 72, configured to perform resource allocation according to the sidelink destination identity and/or the one or more sidelink logical channels, where the active time of sidelink discontinuous transmission includes: an active time of a sidelink discontinuous reception (DRX) and/or an active time of a sidelink discontinuous transmission (DTX).

The resource allocation apparatus provided by the embodiments of the present disclosure implements the methods: obtaining a sidelink destination identity and/or one or more sidelink logical channels which are in active time of a sidelink discontinuous transmission on a time domain resource corresponding to a sidelink grant; performing resource allocation according to the sidelink destination identity and/or the one or more sidelink logical channels, where the active time of sidelink discontinuous transmission includes: an active time of a sidelink discontinuous reception (DRX) and/or an active time of a sidelink discontinuous transmission (DTX), which can avoid the situation that the sidelink transmission terminal selects the destination or LCH that is currently in the DRX and/or DTX silent period on the time domain resource corresponding to the sidelink grant, resulting in waste of resources; realize effective resource allocation on the sidelink interface, thereby solving the problem of resource waste in the resource allocation scheme for the sidelink interface in the related art.

The obtaining the sidelink destination identity in the active time of the sidelink discontinuous transmission on the time domain resource corresponding to the sidelink grant, includes: obtaining the sidelink destination identity in the active time of the sidelink discontinuous transmission on the time domain resource corresponding to the sidelink grant according to a first condition, where the first condition includes at least one of the following: the sidelink destination identity is in the active time of sidelink discontinuous transmission on the time domain resource corresponding to the sidelink grant; or at least one sidelink logical channel of all the sidelink logical channels corresponding to the sidelink destination identity is in the active time of sidelink discontinuous transmission on the time domain resource corresponding to the sidelink grant.

Further, the resource allocation apparatus further includes: a first selecting unit, configured to select, after the obtaining the sidelink destination identity in the active time of the sidelink discontinuous transmission on the time domain resource corresponding to the sidelink grant, a target sidelink logical channel out of the sidelink logical channels corresponding to the sidelink destination identity according to a second condition, where the second condition includes: the sidelink logical channel is in the active time of sidelink discontinuous transmission on the time domain resource corresponding to the sidelink grant.

The obtaining the sidelink logical channel in the active time of the sidelink discontinuous transmission on the time domain resource corresponding to the sidelink grant includes: obtaining the sidelink logical channel in the active time of the sidelink discontinuous transmission on the time domain resource corresponding to the sidelink grant according to a first method; where the first method includes: determining DRX configuration information corresponding to the sidelink logical channel according to the sidelink destination identity corresponding to the sidelink logical channel; determining whether the sidelink logical channel is in the active time of the sidelink discontinuous transmission on the time domain resource corresponding to the sidelink grant according to the DRX configuration information; or, determining the DRX configuration information corresponding to the sidelink logical channel according to a quality of service (QoS) parameter corresponding to the sidelink logical channel; determining whether the sidelink logical channel is in the active time of sidelink discontinuous transmission on the time domain resource corresponding to the sidelink grant according to the DRX configuration information.

In an embodiment of the present disclosure, the obtaining the sidelink destination identity in the active time of the sidelink discontinuous transmission on the time domain resource corresponding to the sidelink grant includes: obtaining the sidelink destination identity in the active time of the sidelink discontinuous transmission on the time domain resource corresponding to the sidelink grant according to a second method; where the second method includes: determining DRX configuration information corresponding to the sidelink destination identity according to a first address; determining whether the sidelink destination identity is in the active time of the sidelink discontinuous transmission on the time domain resource corresponding to the sidelink grant according to the DRX configuration information; the first address includes the sidelink destination identity, or a combination of a sidelink source identity and the sidelink destination identity; or, determining a QoS parameter corresponding to the sidelink logical channel according to the sidelink logical channel corresponding to the sidelink destination identity; determining the DRX configuration information corresponding to the QoS parameter according to the QoS parameter; determining whether the sidelink logical channel is in the active time of the sidelink discontinuous transmission on the time domain resource corresponding to the sidelink grant according to the DRX configuration information; determining, in a case that at least one sidelink logical channel corresponding to the sidelink destination identity is in the active time of the sidelink discontinuous transmission on the time domain resource corresponding to the sidelink grant, that the sidelink destination identity is in the active time of the sidelink discontinuous transmission on the time domain resource corresponding to the sidelink grant.

It should be noted that the division of the units in the embodiment of the present disclosure is schematic, and is only a logical function division, and there may be another division manner in actual implementation. In addition, each functional unit in each embodiment of the present disclosure may be integrated into one processing unit, each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, the integrated unit may be stored in a processor-readable storage medium. Based on such an understanding, the essence of the technical solution in the present disclosure or the part that contributes to the related technology or all or part of the technical solution can be embodied in the form of a software product, and the computer software product is stored in a storage medium, several instructions are included to cause a computer device (which may be a personal computer, a server, or a network device, etc.) or a processor (processor) to execute all or part of the steps of the methods described in the various embodiments of the present disclosure. The aforementioned storage media include: U disk, mobile hard disk, read-only memory (ROM), random access memory (RAM), magnetic disk or optical disk and other media that can store program codes.

What needs to be explained here is that the above-mentioned apparatus provided by the embodiment of the present disclosure can realize all the method steps realized by the above-mentioned method embodiment, and can achieve the same technical effect. Parts and beneficial effects in this embodiment that are the same as those in the method embodiment will not be described in detail here.

An embodiment of the present disclosure also provides a processor-readable storage medium, where a computer program is stored in the processor-readable storage medium, and the computer program is configured to cause the processor to execute the above-mentioned resource allocation method.

The processor-readable storage medium may be any available medium or data storage device that the processor can access, which includes but not limited to magnetic storage (such as floppy disk, hard disk, magnetic tape, magneto-optical disk (Magneto-Optical Disk, MO), etc.) , optical storage (such as Compact Disk (CD), digital versatile disc (Digital Versatile Disc, DVD), Blu-ray disc (Blu-ray Disc, BD), high-definition versatile disc (HVD), etc.), and semiconductor memory (such as read-only memory (Read-Only Memory, ROM), erasable programmable read-only memory (Erasable Programmable Read-Only Memory, EPROM), charged erasable programmable read-only memory (Electrically Erasable Programmable read only memory, EEPROM), non-volatile memory (NAND FLASH), solid state hard disk (Solid State Disk or Solid State Drive, SSD)), etc.

The implementation embodiments of the resource allocation method above are all applicable to the embodiment of the processor-readable storage medium, and can also achieve the same technical effect.

Those skilled in the art should understand that the embodiments of the present disclosure may be provided as methods, systems, or computer program products. Therefore, the present disclosure can take the form of an entirely hardware embodiment, an entirely software embodiment, or an embodiment combining software and hardware aspects. Furthermore, the present disclosure may take the form of a computer program product embodied on one or more computer-usable storage media (including but not limited to magnetic disk storage, optical storage, etc.) having computer-usable program code embodied therein.

The present disclosure is described with reference to flowchart illustrations and/or block diagrams of methods, devices (systems), and computer program products according to embodiments of the present disclosure. It should be understood that each procedure and/or block in the flowchart and/or block diagrams, and combinations of procedures and/or blocks in the flowchart and/or block diagrams can be implemented by computer-executable instructions. These computer-executable instructions can be provided to a general-purpose computer, special purpose computer, embedded processor, or processor of other programmable data processing device to produce a machine, such that instructions executed by the processor of the computer or other programmable data processing device produce an apparatus for implementing the functions specified in one or more procedures of a flowchart and/or one or more blocks of a block diagram.

These processor-executable instructions may also be stored in a processor-readable memory capable of directing a computer or other programmable data processing device to operate in a specific manner, such that the instructions stored in the processor-readable memory produce a manufacturing product including instruction apparatus, the instruction apparatus realizes the function specified in one or more procedures of the flowchart and/or one or more blocks of the block diagram.

These processor-executable instructions can also be loaded onto a computer or other programmable data processing device, which causes a series of operational steps to be performed on a computer or other programmable device to produce a computer-implemented process, so that the instructions executed on the computer or other programmable devices provide steps for realizing the functions specified in one or more procedures of the flowchart and/or one or more blocks of the block diagram.

It should be noted that the division of the above modules is only a division of logical functions, and may be fully or partially integrated into a physical entity or physically separated during actual implementation, and these modules may all be implemented in the form of calling software through processing elements; these modules can also be all implemented in the form of hardware; some modules can also be implemented in the form of calling software through processing elements, and some modules can be implemented in the form of hardware. For example, the determining module may be a separate processing element, or may be integrated into a certain chip of the above-mentioned apparatus.

In addition, the modules may also be stored in the memory of the above-mentioned apparatus in the form of program code, and a certain processing element of the above-mentioned apparatus may call and execute the functions of the determining modules above. The implementation of other modules is similar. In addition, all or part of these modules can be integrated together, and can also be implemented independently. The processing element mentioned here may be an integrated circuit with signal processing capability. In the implementation process, each step of the above-mentioned method or each module above can be completed by an integrated logic circuit of hardware in the processor element or an instruction in the form of software.

For example, each module, unit, subunit or submodule may be one or more integrated circuits configured to implement the above-mentioned method, for example: one or more specific integrated circuits (Application Specific Integrated Circuit, ASIC), or, one or more microprocessors (digital signal processor, DSP), or, one or more field programmable gate arrays (Field Programmable Gate Array, FPGA), etc. For another example, when one of the above modules is implemented in the form of a processing element scheduling program code, the processing element may be a general-purpose processor, such as a central processing unit (Central Processing Unit, CPU) or other processors that can call program codes. For another example, these modules can be integrated together and implemented in the form of a system-on-a-chip (system-on-a-chip, SOC).

The terms "first", "second" and the like in the specification and claims of the present disclosure are used to distinguish similar objects, and are not necessarily used to describe a specific order or sequence. It should be understood that the data so used may be interchanged under appropriate circumstances such that the embodiments of the present disclosure described herein are implemented, for example, in sequences other than those illustrated or described herein. Furthermore, the terms "including" and "having", as well as any variations thereof, are intended to cover a non-exclusive inclusion, for example, a process, method, system, product or device including a sequence of steps or elements is not necessarily limited to the expressly listed instead, may include other steps or elements not explicitly listed or inherent to the process, method, product or device. In addition, the use of "and/or" in the specification and claims means at least one of the connected objects, such as A and/or B and/or C, which includes seven(7) situations that A alone, B alone, C alone, and both A and B exist, both B and C exist, both A and C exist, and A, B, and C all exist. Similarly, the use of "at least one of A and B" in the present specification and claims should be understood as "A alone, B alone, or both A and B exist".

The embodiments of the present disclosure are described above in conjunction with the drawings, but the present disclosure is not limited to the above-mentioned specific implementations, the above-mentioned specific implementations are only illustrative and not restrictive. Under the enlightenment of the present disclosure, those ordinarily skilled in the art can also make many forms without departing from the purpose of the present disclosure and the protection scope of the claims, all of which are within the protection of the present disclosure.

## Claims

1. A resource allocation method comprising:

    obtaining a sidelink destination identity and/or one or more sidelink logical channels which are in active time of a sidelink discontinuous transmission on a time domain resource corresponding to a sidelink grant;
    performing resource allocation according to the sidelink destination identity and/or the one or more sidelink logical channels,
    wherein the active time of sidelink discontinuous transmission comprises: an active time of a sidelink discontinuous reception (DRX) and/or an active time of a sidelink discontinuous transmission (DTX).

2. The resource allocation method according to claim 1, wherein the obtaining the sidelink destination identity in the active time of the sidelink discontinuous transmission on the time domain resource corresponding to the sidelink grant, comprises:

    obtaining the sidelink destination identity in the active time of the sidelink discontinuous transmission on the time domain resource corresponding to the sidelink grant according to a first condition,
    wherein the first condition comprises at least one of the following:

        the sidelink destination identity is in the active time of sidelink discontinuous transmission on the time domain resource corresponding to the sidelink grant; or
        at least one sidelink logical channel of all the sidelink logical channels corresponding to the sidelink destination identity is in the active time of sidelink discontinuous transmission on the time domain resource corresponding to the sidelink grant.

3. The resource allocation method according to claim 2, wherein after the obtaining the sidelink destination identity in the active time of the sidelink discontinuous transmission on the time domain resource corresponding to the sidelink grant, further comprising:

selecting a target sidelink logical channel out of the sidelink logical channels corresponding to the sidelink destination identity according to a second condition,
wherein the second condition comprises: the sidelink logical channel is in the active time of sidelink discontinuous transmission on the time domain resource corresponding to the sidelink grant.

4. The resource allocation method according to any one of claims 1 to 3, wherein the obtaining the sidelink logical channel in the active time of the sidelink discontinuous transmission on the time domain resource corresponding to the sidelink grant comprises:

obtaining the sidelink logical channel in the active time of the sidelink discontinuous transmission on the time domain resource corresponding to the sidelink grant according to a first method;
wherein the first method comprises:

determining DRX configuration information corresponding to the sidelink logical channel according to the sidelink destination identity corresponding to the sidelink logical channel; determining whether the sidelink logical channel is in the active time of the sidelink discontinuous transmission on the time domain resource corresponding to the sidelink grant according to the DRX configuration information; or,
determining the DRX configuration information corresponding to the sidelink logical channel according to a quality of service (QoS) parameter corresponding to the sidelink logical channel; determining whether the sidelink logical channel is in the active time of sidelink discontinuous transmission on the time domain resource corresponding to the sidelink grant according to the DRX configuration information.

5. The resource allocation method according to claim 1, wherein the obtaining the sidelink destination identity in the active time of the sidelink discontinuous transmission on the time domain resource corresponding to the sidelink grant comprises:

obtaining the sidelink destination identity in the active time of the sidelink discontinuous transmission on the time domain resource corresponding to the sidelink grant according to a second method;
wherein the second method comprises:

determining DRX configuration information corresponding to the sidelink destination identity according to a first address; determining whether the sidelink destination identity is in the active time of the sidelink discontinuous transmission on the time domain resource corresponding to the sidelink grant according to the DRX configuration information; the first address comprises the sidelink destination identity, or a combination of a sidelink source identity and the sidelink destination identity; or,
determining a QoS parameter corresponding to the sidelink logical channel according to the sidelink logical channel corresponding to the sidelink destination identity; determining the DRX configuration information corresponding to the QoS parameter according to the QoS parameter; determining whether the sidelink logical channel is in the active time of the sidelink discontinuous transmission on the time domain resource corresponding to the sidelink grant according to the DRX configuration information; determining, in a case that at least one sidelink logical channel corresponding to the sidelink destination identity is in the active time of the sidelink discontinuous transmission on the time domain resource corresponding to the sidelink grant, that the sidelink destination identity is in the active time of the sidelink discontinuous transmission on the time domain resource corresponding to the sidelink grant.

6. A terminal, comprising a memory, a transceiver, and a processor,

wherein the memory is configured to store a computer program; the transceiver is configured to send and receive data under the control of the processor; the processor is configured to read the computer program in the memory and perform the following operations of
obtaining a sidelink destination identity and/or one or more sidelink logical channels which are in active time of a sidelink discontinuous transmission on a time domain resource corresponding to a sidelink grant;
performing resource allocation according to the sidelink destination identity and/or the one or more sidelink logical channels,

wherein the active time of sidelink discontinuous transmission comprises: an active time of a sidelink discontinuous reception (DRX) and/or an active time of a sidelink discontinuous transmission (DTX).

7. The terminal according to claim 6, wherein the obtaining the sidelink destination identity in the active time of the sidelink discontinuous transmission on the time domain resource corresponding to the sidelink grant, comprises:

obtaining the sidelink destination identity in the active time of the sidelink discontinuous transmission on the time domain resource corresponding to the sidelink grant according to a first condition,
wherein the first condition comprises at least one of the following:

the sidelink destination identity is in the active time of sidelink discontinuous transmission on the time domain resource corresponding to the sidelink grant; or
at least one sidelink logical channel of all the sidelink logical channels corresponding to the sidelink destination identity is in the active time of sidelink discontinuous transmission on the time domain resource corresponding to the sidelink grant.

8. The terminal according to claim 7, wherein the operations further comprise:

selecting, after the obtaining the sidelink destination identity in the active time of the sidelink discontinuous transmission on the time domain resource corresponding to the sidelink grant, a target sidelink logical channel out of the sidelink logical channels corresponding to the sidelink destination identity according to a second condition,
wherein the second condition comprises: the sidelink logical channel is in the active time of sidelink discontinuous transmission on the time domain resource corresponding to the sidelink grant.

9. The terminal according to any one of claims 6 to 8, wherein the obtaining the sidelink logical channel in the active time of the sidelink discontinuous transmission on the time domain resource corresponding to the sidelink grant comprises:

obtaining the sidelink logical channel in the active time of the sidelink discontinuous transmission on the time domain resource corresponding to the sidelink grant according to a first method;
wherein the first method comprises:

determining DRX configuration information corresponding to the sidelink logical channel according to the sidelink destination identity corresponding to the sidelink logical channel; determining whether the sidelink logical channel is in the active time of the sidelink discontinuous transmission on the time domain resource corresponding to the sidelink grant according to the DRX configuration information; or,
determining the DRX configuration information corresponding to the sidelink logical channel according to a quality of service (QoS) parameter corresponding to the sidelink logical channel; determining whether the sidelink logical channel is in the active time of sidelink discontinuous transmission on the time domain resource corresponding to the sidelink grant according to the DRX configuration information.

10. The terminal according to claim 6, wherein the obtaining the sidelink destination identity in the active time of the sidelink discontinuous transmission on the time domain resource corresponding to the sidelink grant comprises:

obtaining the sidelink destination identity in the active time of the sidelink discontinuous transmission on the time domain resource corresponding to the sidelink grant according to a second method;
wherein the second method comprises:

determining DRX configuration information corresponding to the sidelink destination identity according to a first address; determining whether the sidelink destination identity is in the active time of the sidelink discontinuous transmission on the time domain resource corresponding to the sidelink grant according to the DRX configuration information; the first address comprises the sidelink destination identity, or a combination of a sidelink source identity and the sidelink destination identity; or,
determining a QoS parameter corresponding to the sidelink logical channel according to the sidelink logical channel corresponding to the sidelink destination identity; determining the DRX configuration information corresponding to the QoS parameter according to the QoS parameter; determining whether the sidelink logical channel is in the active time of the sidelink discontinuous transmission on the time domain resource corresponding to the sidelink grant according to the DRX configuration information; determining, in a case that at least one sidelink logical channel corresponding to the sidelink destination identity is in the active time of the sidelink discontinuous transmission on the time domain resource corresponding to the sidelink grant, that the sidelink destination identity is in the active time of the sidelink discontinuous transmission on the time domain resource corresponding to the sidelink grant.

11. A resource allocation apparatus, comprising:

a first obtaining unit, configured to obtain a sidelink destination identity and/or one or more sidelink logical channels which are in active time of a sidelink discontinuous transmission on a time domain resource corresponding to a sidelink grant;
a first allocating unit, configured to perform resource allocation according to the sidelink destination identity and/or the one or more sidelink logical channels,
wherein the active time of sidelink discontinuous transmission comprises: an active time of a sidelink discontinuous reception (DRX) and/or an active time of a sidelink discontinuous transmission (DTX).

12. The resource allocation apparatus according to claim 11, wherein the obtaining the sidelink destination identity in the active time of the sidelink discontinuous transmission on the time domain resource corresponding to the sidelink grant, comprises:

obtaining the sidelink destination identity in the active time of the sidelink discontinuous transmission on the time domain resource corresponding to the sidelink grant according to a first condition,
wherein the first condition comprises at least one of the following:

the sidelink destination identity is in the active time of sidelink discontinuous transmission on the time domain resource corresponding to the sidelink grant; or
at least one sidelink logical channel of all the sidelink logical channels corresponding to the sidelink destination identity is in the active time of sidelink discontinuous transmission on the time domain resource corresponding to the sidelink grant.

13. The resource allocation apparatus according to claim 12, further comprising:

a first selecting unit, configured to select, after the obtaining the sidelink destination identity in the active time of the sidelink discontinuous transmission on the time domain resource corresponding to the sidelink grant, a target sidelink logical channel out of the sidelink logical channels corresponding to the sidelink destination identity according to a second condition,
wherein the second condition comprises: the sidelink logical channel is in the active time of sidelink discontinuous transmission on the time domain resource corresponding to the sidelink grant.

14. The resource allocation apparatus according to any one of claims 11 to 13, wherein the obtaining the sidelink logical channel in the active time of the sidelink discontinuous transmission on the time domain resource corresponding to the sidelink grant comprises:

obtaining the sidelink logical channel in the active time of the sidelink discontinuous transmission on the time domain resource corresponding to the sidelink grant according to a first method;
wherein the first method comprises:

determining DRX configuration information corresponding to the sidelink logical channel according to the sidelink destination identity corresponding to the sidelink logical channel; determining whether the sidelink logical channel is in the active time of the sidelink discontinuous transmission on the time domain resource corresponding to the sidelink grant according to the DRX configuration information; or,
determining the DRX configuration information corresponding to the sidelink logical channel according to a quality of service (QoS) parameter corresponding to the sidelink logical channel; determining whether the sidelink logical channel is in the active time of sidelink discontinuous transmission on the time domain resource corresponding to the sidelink grant according to the DRX configuration information.

15. The resource allocation apparatus according to claim 11, wherein the obtaining the sidelink destination identity in the active time of the sidelink discontinuous transmission on the time domain resource corresponding to the sidelink grant comprises:

obtaining the sidelink destination identity in the active time of the sidelink discontinuous transmission on the time domain resource corresponding to the sidelink grant according to a second method;
wherein the second method comprises:

determining DRX configuration information corresponding to the sidelink destination identity according to a first address; determining whether the sidelink destination identity is in the active time of the sidelink discontinuous transmission on the time domain resource corresponding to the sidelink grant according to the DRX configuration information; the first address comprises the sidelink destination identity, or a combination of a sidelink source identity and the sidelink destination identity; or,
determining a QoS parameter corresponding to the sidelink logical channel according to the sidelink logical channel corresponding to the sidelink destination identity; determining the DRX configuration information corresponding to the QoS parameter according to the QoS parameter; determining whether the sidelink logical channel is in the active time of the sidelink discontinuous transmission on the time domain resource corresponding to the sidelink grant according to the DRX configuration information; determining, in a case that at least one sidelink logical channel corresponding to the sidelink destination identity is in the active time of the sidelink discontinuous transmission on the time domain resource corresponding to the sidelink grant, that the sidelink destination identity is in the active time of the sidelink discontinuous transmission on the time domain resource corresponding to the sidelink grant.

16. A processor-readable storage medium, the processor-readable storage medium is stored with a computer program, wherein the computer program is used to cause the processor to execute the resource allocation method according to any one of claims 1 to 5.

**FIG. 1**

**FIG. 2**

CN core network

network side device

Uu interface

Uu interface

UE1

UE2

**FIG. 3**

On Duration        Opportunity for DRX

*UE shall monitor PDCCH*

DRX cycle

**FIG. 4**

| obtaining a sidelink destination identity and/or one or more sidelink logical channels which are in an active time of a sidelink discontinuous transmission on a time domain resource corresponding to a sidelink grant | 51 |

↓

| performing resource allocation according to the sidelink destination identity and/or the one or more sidelink logical channels, where the active time of sidelink discontinuous transmission includes: an active time of a sidelink DRX and/or an active time of a sidelink DTX | 52 |

**FIG. 5**

processor — 63

— 61
memory

bus interface

transceiver — 62

user
interface — 64

**FIG. 6**

first obtaining unit — 71

first allocating unit — 72

**FIG. 7**

**INTERNATIONAL SEARCH REPORT**

| International application No. |
| --- |
| **PCT/CN2022/079525** |

| A. | CLASSIFICATION OF SUBJECT MATTER |
| --- | --- |

H04W 76/14(2018.01)i; H04W 76/28(2018.01)i; H04W 28/02(2009.01)i

According to International Patent Classification (IPC) or to both national classification and IPC

| B. | FIELDS SEARCHED |
| --- | --- |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 不连续发送, 不连续接收, 不连续传输, 非连续发送, 非连续接收, 非连续传输, 目标, 目的, 地址, 标识, 逻辑信道, 逻辑信道优先级, 激活, 唤醒, 时间, 时段, 时长, 窗, 期, drx, dtx, destination, id, logical channel, LCH, logical channel prioritization, LCP, active, wakeup, time, cycle, period, window, d2d, v2v, v2x, sidelink

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 113099518 A (HUAWEI TECHNOLOGIES CO., LTD.) 09 July 2021 (2021-07-09) description, paragraphs [0084]-[0277] | 1-16 |
| PX | CATT. "Impacts of SL DRX on Other Procedures" *3GPP TSG-RAN WG2 Meeting #115-e R2-2106988*, 06 August 2021 (2021-08-06), section 2 | 1-16 |
| X | CN 111466151 A (BEIJING XIAOMI MOBILE SOFTWARE CO., LTD.) 28 July 2020 (2020-07-28) description, paragraphs [0043]-[0094] | 1-16 |
| X | CATT. "Uplink Transmission Enhancements for Power Saving" *3GPP TSG-RAN WG2 Meeting #106 R2-1905667*, 02 May 2019 (2019-05-02), section 2 | 1-16 |

☐ Further documents are listed in the continuation of Box C. ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 April 2022** | **25 May 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/079525**

| Patent document cited in search report | | | Publication date (day/month/year) | Patent family member(s) | | | Publication date (day/month/year) |
|---|---|---|---|---|---|---|---|
| CN | 113099518 | A | 09 July 2021 | WO | 2021139719 | A1 | 15 July 2021 |
| CN | 111466151 | A | 28 July 2020 | WO | 2021179263 | A1 | 16 September 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202110322000